# EUROPEAN PATENT SPECIFICATION

(11) **EP 3 195 916 B1**
(45) Date of publication and mention of the grant of the patent: **31.03.2021**
(21) Application number: 17151730.3
(22) Date of filing: 17.01.2017
(51) Int. Cl.: B01D 45/08, F24C 15/20

(54) **LABYRINTH FILTER FOR KITCHEN EXTRACTOR HOODS**
LABYRINTHFILTER FÜR KÜCHENABZUGSHAUBEN
FILTRE-LABYRINTHE DE HOTTE ASPIRANTE DE CUISINE

(30) Priority: 21.01.2016 IT UB20165818 U
(43) Date of publication of application: 26.07.2017
(73) Proprietor: SIFIM - S.R.L., 60035 Jesi (AN) (IT)
(72) Inventor: PELAGAGGE, LUCA, 60015 FALCONARA MARITTIMA (AN) (IT)
(74) Representative: Baldi, Claudio

(56) References cited:
- EP-A1- 2 287 534
- EP-A1- 2 363 190
- WO-A1-2015/150496
- US-A1- 2004 037 753
- US-A1- 2008 202 083

## Description

The present application relates to a filter for the treatment of exhaustion fumes, such as the filters mounted in kitchen extractor hoods. In particular, it relates to labyrinth filters for kitchen extractor hoods.

Devices intended to treat kitchen fumes, both for domestic and professional use, usually have a labyrinth structure. Such a labyrinth structure is normally obtained with sections, preferably metal sections, disposed in a suitable frame in a way to create a winding trajectory for fumes, defined as "labyrinth". In such manner, the grease particles contained in the fumes are deposited on the walls of the labyrinth trajectory.

Said labyrinth filters are impaired by some drawbacks. In fact, the more winding the trajectory imposed on the fumes is, the more effective the filter will be. Evidently, the complexity of the trajectory is affected by the difficulties encountered when making the sections, and by the way in which the sections are assembled to form the filter.

In general, in order to obtain relatively complex structures with rather simple sections, elements with different shapes need to be assembled in a complex way, with high costs and long production times.

EP2287534 **discloses a flame arresting geese filter comprising corrugated sheets with perforate zones.**

WO2015/150496 **discloses a medium receptacle (of an extractor hood comprising at least one obliquely arranged corrugated panel.**

US20080202083 **discloses a geese filter having corrugated baffle.**

US20040037753 **discloses a filer matrix for a boiler.**

EP2363190 **discloses a filter for treatment of exhaust fumes.**

The purpose of the present invention is to provide a labyrinth filter for kitchen fumes or the like, which is able to provide a very complex trajectory for said fumes, starting from a base structure that is extremely simple and easy to assemble.

Such a purpose is achieved according to the invention with the characteristics that are listed in the attached claim 1.

Advantageous embodiments appear from the dependent claims.

The purpose of the present invention is a labyrinth filter comprising a frame wherein a plurality of sections, preferably metal sections, is arranged and suitably disposed in order to form a labyrinth trajectory.

The filter comprises:
- a plurality of lower sections disposed in the frame,
- a plurality of upper sections disposed in the frame above the lower sections, and
- a plurality of intermediate sections disposed between the lower sections and the upper sections in a way to generate a winding labyrinth trajectory for the fumes passing through the filter.

The intermediate sections comprise a plurality of holes obtained at least on the lateral walls of the intermediate sections to let the fumes pass through.

The advantages of the filter according to the invention are evident. The fact that the intermediate sections comprise a plurality of holes allows the fumes to flow through the holes of the intermediate sections, thus optimizing the filtering efficiency of the filter.

Further advantages and additional features will appear evident from a detailed description of embodiments of the device according to the present invention, which only has an illustrative, not limiting purpose, with reference to the attached drawings, wherein:
Fig. 1 is a partially interrupted, exploded, perspective view of the various parts of the filter according to the invention;
Fig. 2 is a top view of the filter of Fig. 1 in assembled condition;
Fig. 3 is an exploded, perspective view of an upper section, an intermediate section and a lower section of the filter of Fig. 1;
Fig. 3A is a cross-sectional view of the sections of Fig. 3;
Fig. 4 is a partially interrupted, sectional view taken along the sectional plane IV-IV of Fig. 2;
Fig. 5 in an enlarged detail of Fig. 4.
Fig. 6 is a photograph of a portion of the intermediate section;
Fig. 7 is a partially interrupted, exploded, perspective view of the various parts of the filter according to a second embodiment of the invention;
Fig. 8 is a sectional view of the filter of Fig. 7.

With reference to the Figures, the filter of the invention is described, which is generally indicated with reference numeral 1.

In the following description the terms "lower" and "upper" refer to the figures in which the filter is disposed in parallel position with respect to a horizontal plane, it being understood that the filter (1) can be disposed in any vertical or inclined position with respect to a horizontal plane.

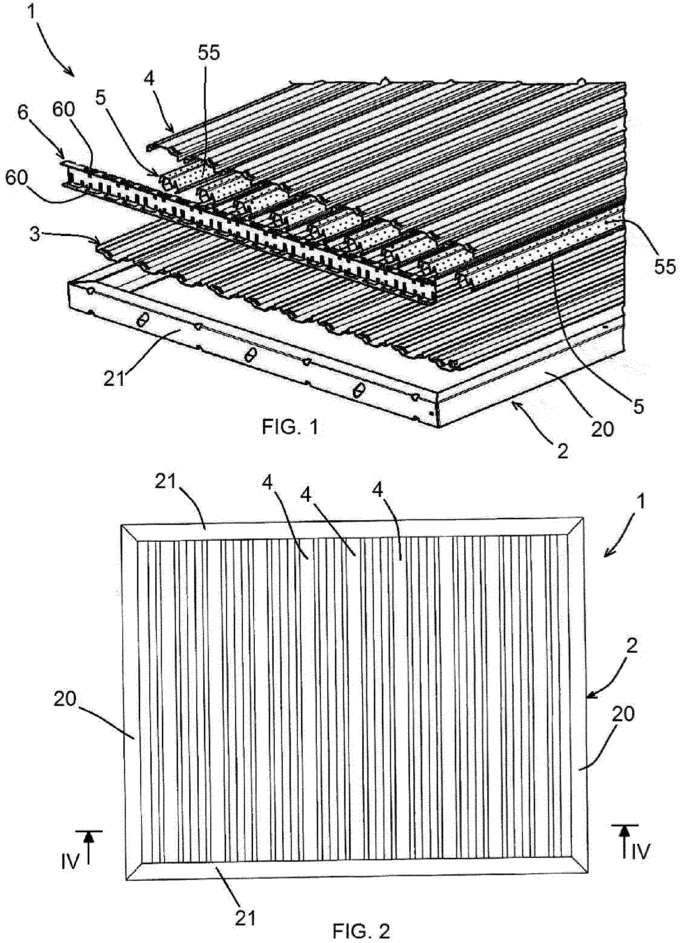

With reference to Figs. 1 - 6, the filter (1) comprises:
- a frame (2),
- a plurality of lower sections (3) disposed in the frame (2),
- a plurality of upper sections (4) disposed in the frame above the lower sections (3), and
- a plurality of intermediate sections (5) disposed between the lower sections (3) and the upper sections (4).

With reference to Figs. 1 and 2, the frame (2) is shaped as a rectangular frame comprising two longitudinal sides (20) and two transverse sides (21). The frame (2) is preferably made of steel. Preferably, the transverse sides (21) are longer than the longitudinal sides (20).

The sections (3, 4, 5) are parallel to each other and parallel to the longitudinal sides (20) of the frame, and extend for the entire length of the longitudinal sides of the frame.

The filter (1) is provided with two inserts (6) (of which, only one is shown in Fig. 1) mounted in the transverse sides (21) of the frame, for fixing the sections (3, 4, 5) to the frame (2). Each insert (6) is a section, preferably a steel section, with a slightly lower length than the transverse side (21) of the frame, in a way to be fixed to the internal surface of the transverse side of the frame. In view of the above, the insert has a "U"-shaped section. The insert (6) has a plurality of slots (60) intended to receive and engage the ends of each section (3, 4, 5).

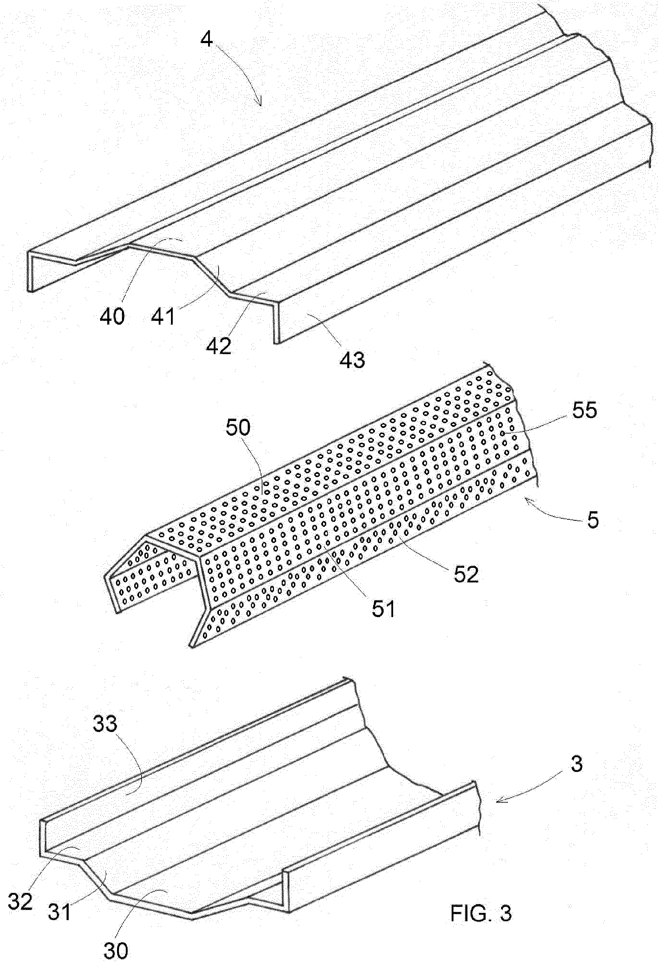

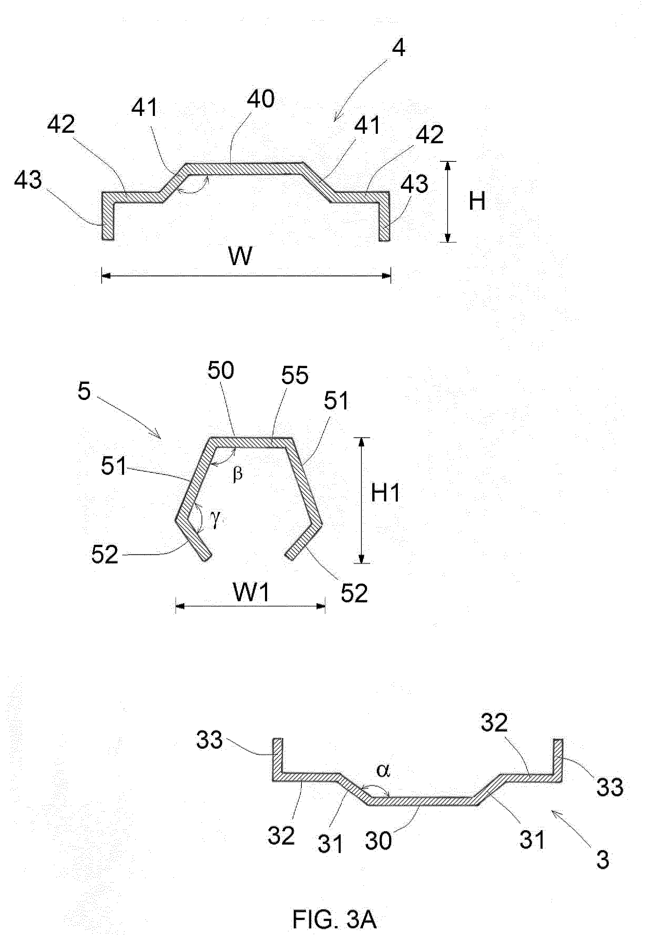

With reference to Figs. 3 and 3A, all sections (3, 4, 5) have the same length and a substantially "U"-shaped transverse section.

The shape and size of the upper section (4) are identical to the shape and size of the lower section (3). The lower sections (3) are disposed in adjacent position with upward concavity. The upper sections (3) are disposed in adjacent position with downward concavity, and are staggered with respect to the lower sections. The upper sections (4) are vertically spaced with respect to the lower sections (3), so that the intermediate sections (5) are disposed between the lower sections and the upper sections.

The intermediate section (5) has a width (W1) lower than the width (W) of the upper section (4). The intermediate section (5) has a height (H1) higher than the height (H) of the upper section (4). The term "width" indicates the sectional horizontal extension and the term "height" indicates the sectional vertical extension. In this way, the intermediate section (5) can be disposed inside the upper section (4), with downward concavity, so that the intermediate section (5) protrudes in lower position with respect to the upper section (4).

The upper section (4) and the lower section (3) comprise:
- a central portion (40; 30) that extends horizontally,
- two lateral inclined portions (41; 31) that extend from the central portion (40; 30) forming an obtuse angle (α) in the range between 110° and 160°,
- two lateral horizontal portions (42; 32) that extend horizontally from the lateral inclined portions (41; 31),
- two lateral vertical portions (43; 33) that extend vertically from the lateral inclined portions (41).

Therefore, the lateral horizontal portions (42; 32) are parallel to the central portion (40; 30) and the lateral vertical portions (43; 33) are orthogonal to the lateral horizontal portions (42; 32).

The intermediate section (5) comprises:
- a central portion (50) that extends horizontally,
- two lateral diverging portions (51) that extend from the central portion (50) forming an obtuse angle (β) in the range between 110° and 160°,
- two lateral converging portions (52) that extend from the lateral diverging portions (51) forming an obtuse angle (γ) in the range between 110° and 160°.

The central portion (50) of the intermediate section (5) has a width lower than the width of the central portion (4) of the upper section.

The obtuse angle (β) between the central portion (50) and the lateral diverging portions (51) of the intermediate section is lower than the obtuse angle (α) between the central portion (40) and the lateral inclined portions (41) of the upper section (4).

The obtuse angle (γ) between the lateral diverging portions (51) and the lateral converging portions (52) of the intermediate section is substantially identical to the obtuse angle (β) between the central portion (50) and the lateral diverging portions (51) of the intermediate section.

The upper sections (4) and the lower sections (3) are made of steel.

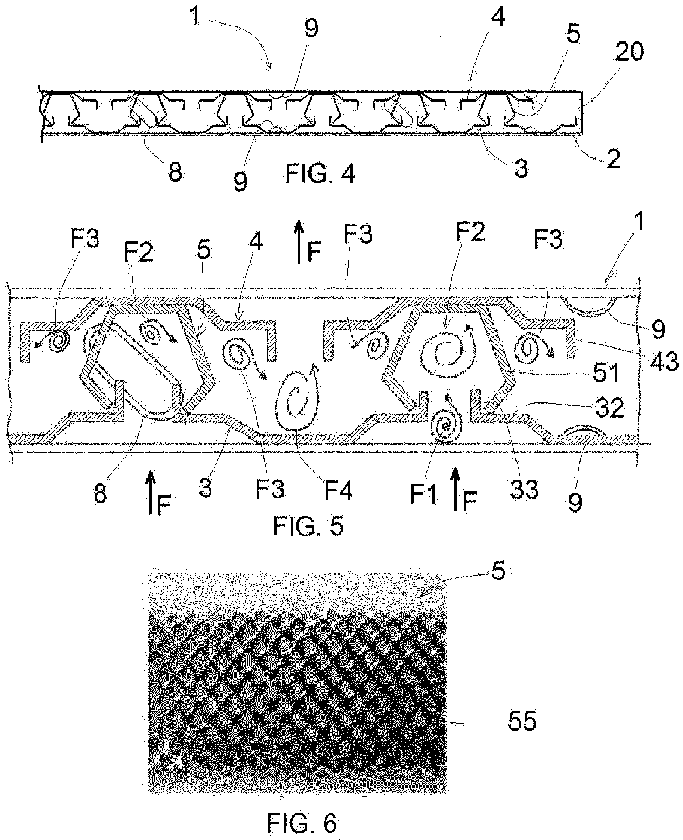

The intermediate section (5) has a plurality of holes (55) to let the fumes pass through. With reference to Fig. 6, the intermediate section (5) may consist in a drawn mesh or a microperforated sheet metal, preferably a microperforated sheet steel. The maximum diameter of the holes (55) must be lower than 1 mm, preferably lower than 0.8 mm.

With reference to Figs. 4 and 5, when the filter (1) is assembled, the central portion (50) of the intermediate section is stopped under the central portion (40) of the upper section. The lateral vertical portion (33) of the lower section is disposed inside the intermediate section (5), in a way that the end of the lateral diverging portion (52) of the intermediate section is disposed in the right angle that is formed between the lateral horizontal portion (32) and the lateral vertical portion (33) of the lower section. In other words, the lower ends of the intermediate section (5) are in contact with the lower section (3).

The fumes can circulate in orthogonal direction with respect to the support surface of the filter, passing through the holes (55) obtained in the lateral diverging portions (51) and in the lateral converging portions (52) of the intermediate section. Therefore, the intermediate section (5) needs to be provided with holes (55) only on the lateral diverging portions (51) and on the lateral converging portions (52).

The filter (1) comprises oval and circular slots (8, 9) obtained in the frame (2) and in the inserts (6) in order to evacuate the grease and oil from the filter towards a collection channel of the extractor hood.

With reference to Fig. 5, the fumes enter the filter (1) from below, in the direction of the arrow (F). Consequently, first whirling flows (F1) are created under the horizontal portions (32) of the lower sections (3).

The air of the first whirling flows (F1) is conveyed inside the gap that is created between the vertical portions (33) of two adjacent lower sections in a way to form second whirling flows (F2) inside the intermediate sections (5).

Given the fact that the intermediate sections (5) are perforated, the air passes through the holes (55) of the intermediate sections and third whirling flows (F3) are formed between the lateral diverging portions (51) of the intermediate sections and the vertical portions (43) of the upper sections.

The air from the third whirling flows (F3) passes beyond the vertical portions (43) of the upper sections, forming fourth whirling flows (F4) inside the lower sections (4).

The air of the fourth whirling flows (F4) is conveyed into the gap that is created between the vertical portions (43) of two adjacent front sections in order to exit from the filter.

Given that the intermediate sections (5) are perforated, the fumes flow through the holes (55) of the intermediate sections and the grease is held on the walls of the holes of the intermediate sections, thus achieving a very high filtering efficiency and efficacy in the reduction of flames.

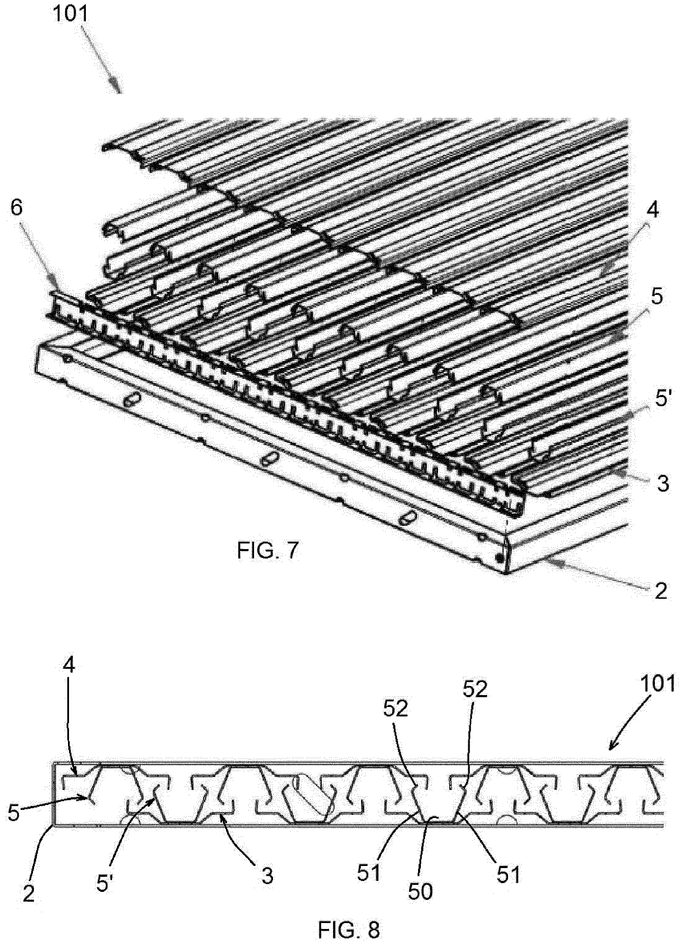

With reference to Figs. 7 and 8, a second embodiment of a filter (101) according to the invention is disclosed. The filter (101) comprises first intermediate sections (5) disposed inside the upper sections (4) with downward concavity, and second intermediate sections (5') disposed inside the lower sections (3) with upward concavity.

The second intermediate sections (5) are identical to the first intermediate sections. In such a case, the lateral converging portions (52) of each second intermediate section (5') are disposed between the lateral diverging portions (51) of the first intermediate sections (5) and the lateral vertical portions (43) of the upper sections. In this way, an even more winding route of the fumes can be obtained compared to the first embodiment.

## Claims

1. Fume extraction filter (1; 101) comprising:
- a frame (2),
- a plurality of lower sections (3) disposed in the frame (2),
- a plurality of upper sections (4) disposed in the frame above the lower sections (3), and
- a plurality of intermediate sections (5; 5') disposed between the lower sections (3) and the upper sections (4) in such a way to generate a winding labyrinth trajectory for the fumes passing through the filter,
wherein the intermediate section (5; 5') comprises:
- a central portion (50) that extends horizontally,
- two lateral diverging portions (51) that extend from the central portion (50) forming an obtuse angle (β) in the range between 110° and 160°,
- two lateral converging portions (52) that extend from the lateral diverging portions (51) forming an obtuse angle (γ) in the range between 110° and 160°, **characterized in** the fact that said intermediate sections (5, 5') comprise a plurality of holes (55) obtained at least on lateral portions (51, 52) of the intermediate sections to let the fumes pass through.

2. The filter (1; 101) of claim 1, wherein said holes (55) of the intermediate sections have a diameter lower than 1 mm.

3. The filter (1; 101) of claim 2, wherein said holes (55) of the intermediate sections have a diameter lower than 0.8 mm.

4. The filter (1; 101) of any one of the preceding claims, wherein said intermediate sections (5, 5') consist in a mesh.

5. The filter (1; 101) of claim 4, wherein said intermediate sections (5, 5') consist in a drawn steel mesh.

6. The filter (1; 101) of any one of the preceding claims, wherein said intermediate sections (5, 5') consist in a microperforated sheet metal.

7. The filter (1; 101) of claim 6, wherein said intermediate sections (5, 5') consist in a microperforated sheet steel.

8. The filter (1; 101) of any one of the preceding claims, wherein said lower, upper and intermediate sections (3, 4, 5) have a substantially "U"-shaped transverse section, wherein
the lower sections (3) are parallel to each other with upward concavity,
the upper sections (4) are parallel to each other with downward concavity, and
the intermediate sections (5, 5') are disposed inside the upper sections with downward concavity and/or inside the lower sections with upward concavity.

9. The filter (1; 101) of claim 8, wherein said upper sections (4) are staggered with respect to the lower sections (3).

10. The filter (1; 101) of any one of the preceding claims, wherein said upper sections (4) are identical to the lower sections (3).

11. The filter (1; 101) of any one of the preceding claims, wherein the intermediate section (5, 5') has a width (W1) lower than the width (W) of the upper section (4) and the intermediate section (5, 5') has a height (H1) higher than the height (H) of the upper section (4).

12. The filter (1; 101) of any one of the preceding claims, wherein the upper section (4) and the lower section (3) comprise:
- a central portion (40; 30) that extends horizontally,
- two lateral inclined portions (41; 31) that extend from the central portion (40; 30) forming an obtuse angle (α) in the range between 110° and 160°,
- two lateral horizontal portions (42; 32) that extend horizontally from the lateral inclined portions (41; 31), and
- two lateral vertical portions (43; 33) that extend vertically from the lateral inclined portions (41).

13. The filter (1) of claim 12, wherein the central portion (50) of the intermediate section is stopped under the central portion (40) of the upper section and the lateral vertical portion (33) of the lower section is disposed inside the intermediate section (5), in a way that the end of the lateral diverging portion (52) of the intermediate section is disposed in the right angle formed between the lateral horizontal portion (32) and the lateral vertical portion (33) of the lower section, wherein said ends of the lateral diverging portions (52) of the intermediate section (5) are in contact with the lower section (3).

14. The filter (1; 101) of any one of the preceding claims, wherein said frame (2) of the filter comprises slots (8, 9) for evacuating oil and grease from the filter.

## Patentansprüche

1. Dunstabzugsfilter (1; 101), umfassend:
- einen Rahmen (2),
- eine Vielzahl von unteren Profilen (3), die im Rahmen (2) angeordnet sind,
- eine Vielzahl von oberen Profilen (4), die im Rahmen über den unteren Profilen (3) angeordnet sind, und
- eine Vielzahl von Zwischenprofilen (5; 5'), die zwischen den unteren Profilen (3) und den oberen Profilen (4) angeordnet sind, um eine gewundene, labyrinthartige Trajektorie für den Dunst zu erzeugen, der den Filter passiert,
wobei die Profile (5; 5') Folgendes umfassen:
- einen mittleren Abschnitt (50), der sich horizontal erstreckt,
- zwei divergierende seitliche Abschnitte (51), die sich von dem mittleren Abschnitt (50) erstrecken und einen stumpfen Winkel (β) von circa 110° bis 160° bilden;
- zwei konvergierende seitliche Abschnitte (52), die sich von den divergierenden seitlichen Abschnitten (51) erstrecken und einen stumpfen Winkel (γ) von circa 110° bis 160° bilden,
**dadurch gekennzeichnet, dass**
die Zwischenprofile (5, 5') eine Vielzahl von Löchern (55) umfassen, die mindestens an seitlichen Abschnitten (51, 52) der Zwischenprofile herausgearbeitet sind, um es dem Dunst zu ermöglichen, den Filter zu passieren.

2. Filter (1; 101) nach Anspruch 1, wobei die Löcher (55) der Zwischenprofile einen Durchmesser von weniger als 1 mm aufweisen.

3. Filter (1; 101) nach Anspruch 2, wobei die Löcher (55) der Zwischenprofile einen Durchmesser von weniger als 0,8 mm aufweisen.

4. Filter (1; 101) nach einem der vorstehenden Ansprüche, wobei die Zwischenprofile (5, 5') aus einem Netz bestehen.

5. Filter (1; 101) nach Anspruch 4, wobei die Zwischenprofile (5, 5') aus einem Netz aus gezogenem Stahl bestehen.

6. Filter (1; 101) nach einem der vorstehenden Ansprüche, wobei die Zwischenprofile (5, 5') aus einem mikroperforierten Blech bestehen.

7. Filter (1; 101) nach Anspruch 6, wobei die Zwischenprofile (5, 5') aus einem mikroperforierten Stahlblech bestehen.

8. Filter (1; 101) nach einem der vorstehenden Ansprüche, wobei die unteren Profile, oberen Profile und Zwischenprofile (3, 4, 5) einen im Wesentlichen U-förmigen Querschnitt aufweisen, wobei
die unteren Profile (3) zueinander parallel mit nach oben gerichteter Wölbung angeordnet sind,
die oberen Profile (4) zueinander parallel mit nach unten gerichteter Wölbung angeordnet sind, und
die Zwischenprofile (5, 5') in den oberen Profilen mit nach unten gerichteter Wölbung und/oder in den unteren Profilen mit nach oben gerichteter Wölbung angeordnet sind.

9. Filter (1; 101) nach Anspruch 8, wobei die oberen Profile (4) versetzt in Bezug auf die unteren Profile (3) angeordnet sind.

10. Filter (1; 101) einem der vorstehenden Ansprüche, wobei die oberen Profile (4) mit den unteren Profilen (3) identisch sind.

11. Filter (1; 101) nach einem der vorstehenden Ansprüche, wobei das Zwischenprofil (5, 5) eine Breite (W1) aufweist, die kleiner als die Breite (W) des oberen Profils (4) ist und das Zwischenprofil (5, 5) eine Höhe (H1) aufweist, die größer als die Höhe (H) des oberen Profils (4) ist.

12. Filter (1; 101) einem der vorstehenden Ansprüche, wobei das obere Profil (4) und das untere Profil (3) Folgendes umfassen:
- einen mittleren Abschnitt (40; 30), der sich horizontal erstreckt,
- zwei schräge seitliche Abschnitte (41; 31), die sich von dem mittleren Abschnitt (40; 30) erstrecken und einen stumpfen Winkel (α) von 110° bis 160° bilden,
- zwei horizontale seitliche Abschnitte (42; 32), die sich horizontal von den schrägen seitlichen Abschnitten (41; 31) erstrecken und
- zwei vertikale seitliche Abschnitte (43; 33), die sich vertikal von den schrägen seitlichen Abschnitten (41) erstrecken.

13. Filter (1) nach Anspruch 12, wobei der mittlere Abschnitt (50) des Zwischenprofils unter dem mittleren Abschnitt (40) des oberen Profils in Anschlag geht und der seitliche vertikale Abschnitt (33) des unteren Profils sich in dem Zwischenprofil (5) anordnet, so dass der Endabschnitt des seitlichen divergierenden Abschnitts (52) des Zwischenprofils sich in dem rechten Winkel anordnet, der sich zwischen dem horizontalen seitlichen Abschnitt (32) und dem vertikalen seitlichen Abschnitt (33) des unteren Profils bildet, wobei die Endabschnitte der divergierenden seitlichen Abschnitte (52) des Zwischenprofils (5) in Kontakt mit dem unteren Profil (3) sind.

14. Filter (1; 101) nach einem der vorstehenden Ansprüche, wobei der Rahmen (2) des Filters Langlöcher (8, 9) zur Beseitigung von Öl und Fett aus dem Filter umfasst.

## Revendications

1. Filtre (1; 101) pour l'aspiration des fumées comprenant :
- un châssis (2),
- une pluralité de profilés inférieurs (3) disposés dans le châssis (2),
- une pluralité de profilés supérieurs (4) disposés dans le châssis, au-dessus des profilés inférieurs (3), et
- une pluralité de profilés intermédiaires (5; 5') disposés entre les profilés inférieurs (3) et les profilés supérieurs (4), de manière à générer un parcours tortueux en forme de labyrinthe pour la fumée qui passe à travers le filtre,
où le profilé intermédiaire (5; 5') comprend:
- une portion centrale (50) qui se déploie horizontalement,
- deux portions latérales divergentes (51) qui se déploient depuis la portion centrale (50) en formant un angle obtus (β) d'environ 110° - 160°;
- deux portions latérales convergentes (52) qui se déploient depuis les portions latérales divergentes (51) en formant un angle obtus (γ) d'environ 110° - 160°,
**caractérisé en ce que**
lesdits profilés intermédiaires (5, 5') comprennent une pluralité d'orifices (55) réalisés au moins dans des parois latérales (51, 52) des profilés intermédiaires pour permettre le passage des fumées qui passent à travers le filtre.

2. Filtre (1; 101) selon la revendication 1, où lesdits orifices (55) des profilés intermédiaires ont un diamètre inférieur à 1 mm.

3. Filtre (1; 101) selon la revendication 2, où lesdits orifices (55) des profilés intermédiaires ont un diamètre inférieur à 0,8 mm.

4. Filtre (1; 101) selon l'une quelconque des revendications précédentes, où lesdits profilés intermédiaires (5, 5') sont constitués d'une maille.

5. Filtre (1; 101) selon la revendication 4, où lesdits profilés intermédiaires (5, 5') sont constitués d'une maille tréfilée en acier.

6. Filtre (1; 101) selon l'une quelconque des revendications précédentes, où lesdits profilés intermédiaires (5, 5') sont constitués d'une tôle métallique micro-perforée.

7. Filtre (1; 101) selon la revendication 6, où lesdits profilés intermédiaires (5, 5') sont constitués d'une tôle micro-perforée en acier.

8. Filtre (1; 101) selon l'une quelconque des revendications précédentes, où lesdits profilés inférieurs, supérieurs et intermédiaires (3, 4, 5) ont une section transversale pratiquement en forme de « U », où
les profilés inférieurs (3) sont disposés parallèles entre eux avec la concavité orientée vers le haut,
les profilés supérieurs (4) sont disposés parallèles entre eux avec la concavité orientée vers le bas, et
les profilés intermédiaires (5, 5') sont disposés dans les profilés supérieurs avec la concavité orientée vers le bas et/ou dans les profilés inférieurs avec la concavité orientée vers le haut.

9. Filtre (1; 101) selon la revendication 8, où les profilés supérieurs (4) sont disposés décalés par rapport aux profilés inférieurs (3).

10. Filtre (1; 101) selon l'une quelconque des revendications précédentes, où lesdits profilés supérieurs (4) sont identiques aux profilés inférieurs (3).

11. Filtre (1; 101) selon l'une quelconque des revendications précédentes, où le profilé intermédiaire (5, 5') a une largeur (W1) inférieure par rapport à la largeur (W) du profilé supérieur (4) et le profilé intermédiaire (5, 5') a une hauteur (H1) supérieure par rapport à la hauteur (H) du profilé supérieur (4).

12. Filtre (1; 101) selon l'une quelconque des revendications précédentes, où le profilé supérieur (4) et le profilé inférieur (3) comprennent :
- une portion centrale (40; 30) qui se déploie horizontalement,
- deux portions latérales inclinées (41; 31) qui se déploient depuis la portion centrale (40; 30) en formant un angle obtus (α) compris entre 110° - 160°,
- deux portions latérales horizontales (42; 32) qui se déploient horizontalement depuis les portions latérales inclinées (41; 31), et
- deux portions latérales verticales (43; 33) qui se déploient verticalement depuis les portions inclinées (41).

13. Filtre (1) selon la revendication 12, où la portion centrale (50) du profilé intermédiaire est en butée sous la portion centrale (40) du profilé supérieur et la portion latérale verticale (33) du profilé inférieur se dispose dans le profil intermédiaire (5), de manière que l'extrémité de la portion latérale divergente (52) du profil intermédiaire se dispose en correspondance de l'angle droit qui se forme entre la portion latérale horizontale (32) et la portion latérale verticale (33) du profilé inférieur, où lesdites extrémités des portions latérales divergentes (52) du profilé intermédiaire (5) sont en contact avec le profilé inférieur (3).

14. Filtre (1; 101) selon l'une quelconque des revendications précédentes, où ledit châssis (2) du filtre comprend des fentes (8, 9) pour l'évacuation d'huile et de graisse du filtre.
